Europäisches Patentamt

**European Patent Office**

Office européen des brevets

(11) Publication number: **0 226 334**
**B1**

## EUROPEAN PATENT SPECIFICATION

(45) Date of publication of the patent specification:
02.05.90

(21) Application number: **86308838.1**

(22) Date of filing: **13.11.86**

(51) Int. Cl.⁴: **B23K 31/02, B21D 47/00**

(54) Method of preventing sag of panel and apparatus thereof.

(30) Priority: **06.12.85 JP 275298/85**

(43) Date of publication of application:
**24.06.87 Bulletin 87/26**

(45) Publication of the grant of the patent:
**02.05.90 Bulletin 90/18**

(84) Designated Contracting States:
**DE FR GB**

(56) References cited:
**US-A- 3 020 867**
**US-A- 3 737 978**

(73) Proprietor: **Kawasaki Jukogyo Kabushiki Kaisha,
1-1 Higashikawasakicho 3-chome Chuo-ku, Kobe-shi
Hyogo 650-91 (JP)**

(72) Inventor: **Sakaguchi, Akira, 2-13 Sekimoricho·3-chome,
Suma-ku, Kobe-shi, Hyogo 654(JP)**
Inventor: **Kinoshita, Tsuneo, 47-14 Yoneda, Yonedacho,
Takasago-shi, Hyogo 676(JP)**

(74) Representative: **Carpenter, David et al, MARKS &
CLERK Alpha Tower Suffolk Street Queensway,
Birmingham B1 1TT(GB)**

ACTORUM AG

## Description

The present invention relates to a method of panel construction having as an object minimisation of the occurrence of the "sag" of a panel which is used for assembling the roof structures, side wall structures and the like of inter alia, vehicles, ships, buildings, and also to an apparatus therefor.

In recent years, there has been a move towards weight reduction in such structures and thus the use of thinner structures has accordingly been prommoted. Soft steel, stainless steel, aluminum alloys and the like are usually applied to the outer plates of the panels. With the use of thinner material "sag" of the outer plate after welding and assemblage is more of a problem, both the local strength of a "sagging" part and the external appearance of the panel being prejudiced.

With the intention of eliminating welding distortion, there has been disclosed a measure wherein a large number of sheets of standard shape are formed into an elongate outer plate by welding, and while loading the plate to effect stretching, the plate is attached to a skeleton (refer to, for example, the official gazette of Japanese Patent Application Publication No. 53-39261. It has also been proposed in addition to preheat the elongate outer panel to effect thermal expansion, whereupon the outer plate is attached to the skeleton (refer to, for example, the official gazette of Japanese Patent Application Publication No. 54-20185). However, both of these proposals require a large scale stretching device and heating device and involve enormous installation costs as well as large numbers of process steps. As another drawback, it is not easy to effect fine control over the set heating temperature. There has also been proposed a measure wherein an outer plate of comparatively small size is put in a heating box, and the whole outer plate is heated to a predetermined temperature and is thereafter welded to a skeleton (refer to, for example, the official gazette of Japanese Patent Application Laid-open No. 60-64791). However, the heating box is complicated in structure. Moreover, as the outer plate becomes larger is size, the heating box needs to be larger in scale in proportion, and so incurs the problems that a large floor space and a workshop of large area are required and that the installation cost becomes high.

US Patent 3 020 867 also discloses a heating and welding method which requires extensive and costly apparatus since it heats the panel from below after lifting the plate of the panel away from the skeleton of the panel. The panel is then replaced but heating is continued until the plate and skeleton have been united by arc-welding.

In view of the problems of the prior art, the present invention has for an object to provide a method and apparatus for panel construction whereby the occurrence of "sag" is minimised by simple steps and an equipment of simple construction.

Further, there has been disclosed a measure wherein a plate having an opening for a window or a door is placed on a heat insulating material laid on a surface table, and heating means such as a heater or a hot iron plate is pressed against the plate by pressure application means such as a press and heats the plate by contact therewith, the plate being thereafter welded to a skeleton (refer to, for example, the official gazette of Japanese Patent Application Publication No. 53-39262). This measure, however, has the drawback that the heating means and the pressing means need to be larger in scale in proportion to the size of the plate and thus are not easy to handle.

In view of the problems of the prior arts, the present invention has for an object to provide a method and apparatus for panel construction according to which the occurrence of the "sag" is prevented during the assemblage of a thin-walled structure.

In accordance with a first aspect of the present invention there is provided a method of panel construction in which a metallic panel plate is heated to cause thermal expansion, and is secured while expanded to a metallic panel skeleton such that the shrinkage consequent upon cooling of the plate develops tensile residual stress in the plate to prevent sag of the panel, the method being characterized by the steps of positioning the plate on the skeleton, gripping opposite ends of the plate with grasp electrodes of a resistance heating means, heating the plate to a predetermined temperature by causing an electric current to flow therethrough between said grasp electrodes, and welding the plate, while in a heated, expanded condition, to said skeleton.

In accordance with a second aspect of the present invention there is provided apparatus for use in panel construction comprising support means for supporting, in use, a metallic panel skeleton upon which a metallic panel plate is to be secured to constitute the panel, heating means for heating a panel plate, and welding means for welding the plate to the skeleton, characterized in that said heating means comprises an electrical resistance heater having grasp electrodes for releasably gripping opposite ends of the plate in use.

It will be recognised from the above that the plate is preheated to the predetermined temperature to be thermally expanded by the grasp electrodes and electric conduction members of the resistance heating means before being attached to the skeleton, and it is thereafter welded, so that the tensile residual stress capable of checking the occurrence of the "sag" is developed in the plate by the thermal shrinkage deformation in the cooling process.

One example of the invention is illustrated in the accompanying drawings wherein:-

Fig. 1 is a perspective view showing an arrangement in which both the end parts of a plate are gripped by the grasp electrodes of resistance heating means;

Fig. 2 is an exploded perspective view showing the grasp electrodes;

Fig. 3 is a perspective view of an electric conduction member;

Fig. 4 is a diagram showing the cooling characteristic of a plate at the stage of natural cooling after heating;

Fig. 5 is a diagram showing a temperature distribution in the heating test of a plate specimen; and

Figs. 6 and 7 are diagrams each showing a temperature distribution in the heating test of a plate specimen which has a cut-away part.

Now, embodiments of the present invention will be described with reference to the drawings.

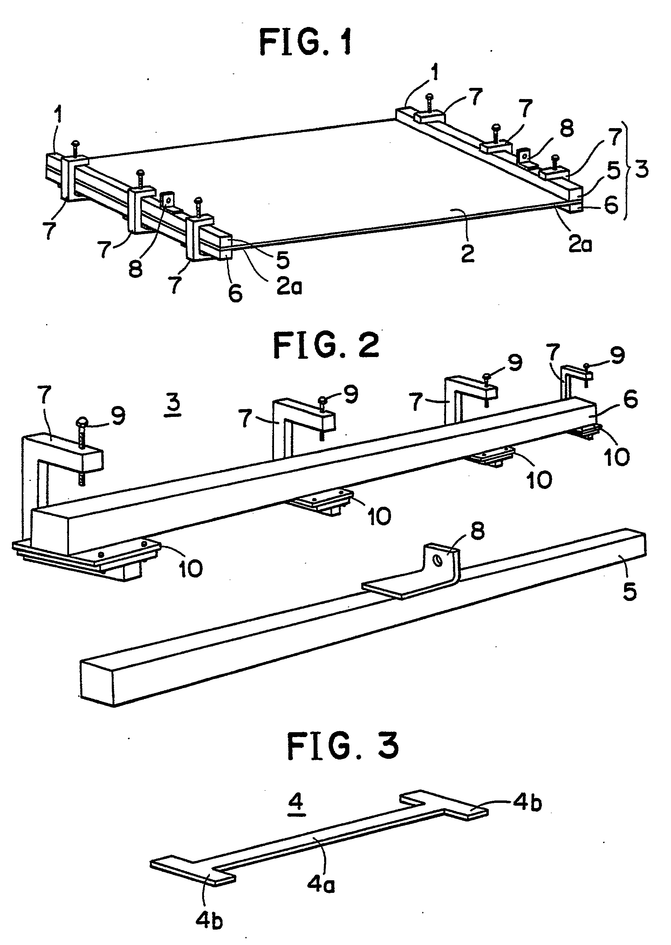

Resistance heating means 1 shown in Figs. 1 to 3 is utilized in fabricating a panel in which a plate 2 is attached to a skeleton (not shown). An apparatus for preventing the sag of the panel (not generally shown) is constructed of a known supporting rest (not shown) made up of sleepers, bearers etc. and arranged on a floor in order to support the skeleton, a resistance heating means 1 for preheating the plate 2, and known welding means (not shown) made up of a spot welding machine or the like. The resistance heating means and the welding means are disposed so as to be movable relative to the skeleton which is held horizontal at a proper height by the supporting means, and the plate which is located on the skeleton.

The resistance heating means 1 consists of grasp electrodes 3 and one or more electric conduction members 4. The grasp electrodes releasably grip both ends of the plate 2 (refer to Fig. 1) and directly cause current to flow, thereby to heat the plate 2. As shown in Fig. 2, each grasp electrode comprises an upper electrode 5 and a lower electrode bar 6 which are made of a copper alloy material or the like, and clamps 7 which are made of a steel material or the like. In this embodiment, the upper electrode bar 5 and the lower electrode bar 6 are formed in the shapes of straight bars of rectangular sections, and a terminal piece 8 for connecting an electric wiring lead is fastened on the top surface of the upper electrode bar 5.

The clamps 7 each having a locking bolt 9 and a bracket 10 are equally spaced along the length of the electrode bars 5, 6 in order to ensure a uniform conduction performance. The plate 2 is clamped between the upper electrode bar 5 and the lower electrode bar 6 by the locking bolts and the brackets. In the event that rapid detachment is expected, known hand operated clamps may well be mounted on the upper electrode bar instead of the locking bolts.

The electric conduction member 4 serves, when required to form a conduction path by short-circuiting a cut-away part or an aperture of the plate 2 during electrical preheating of the plate. As shown in Fig. 3, this electric conduction member is formed in the shape of letter I which has fitting portions 4b, 4b at both the ends of a strip portion 4a, from aluminum alloy plate 1.6 mm thick by way of example. In use the strip portion 4a is interposed in the cut-away part of a plate 2 B in a heating test to be described later) and has the fitting portions 4b, 4b detachably secured to peripheral edge parts of the cut-away part B by known means such as hand clamps or vices, to establish a conduction path short-circuiting the cut-away part of the plate. In order readily to cope with changes in the shape of the cut-away part B, the electric conduction members 4 are prepared with various lengths, or are sometimes formed from electric wires having appropriate cross-sectional areas. The direction of arrangement of the electric conduction members 4 is set to be parallel or slant to the facing direction of the grasp electrodes 3, 3 (the direction in which the current flows) as may be needed.

Next, there will be described a method of preventing the sag of a panel to which the resistance heating means 1 is applied.

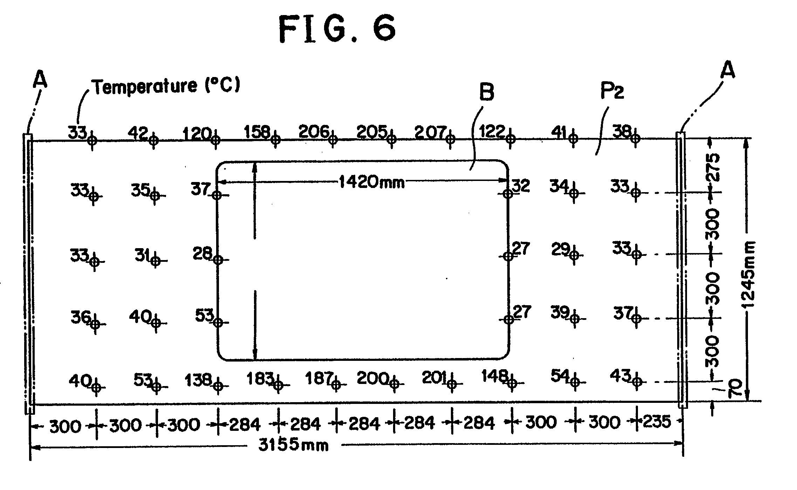

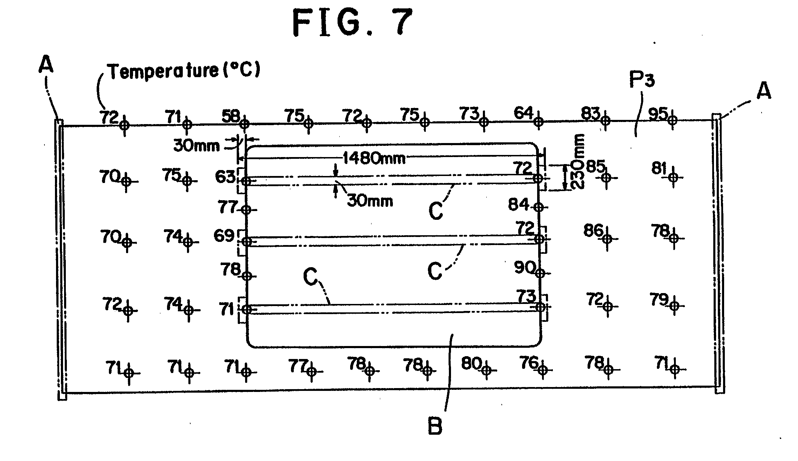

First, the plate 2 is located on the skeleton held horizontal at the proper height by the supporting means on the floor. The plate, which is at a heating position, is gripped at the end parts 2a, 2a in the widthwise direction thereof by the grasp electrodes 3, 3 which are clamped in place by the locking bolts 9, 9. If there is a cut-away part or space B (refer to Figs. 6 or 7) in the plate 2, electric conduction members 4 are fixed to the required parts of the cut-away part so as to form conduction paths. Subsequently, current is fed through the plate 2 by the grasp electrodes 3, 3 to preheat this plate to a predetermined temperature T described later and so thermally expand it. Thereafter the grasp electrodes 3, 3 are released from the plate 2 and are removed from the first heating position, and are moved to the next heating position, wherein they are caused to grip the widthwise end parts of a further plate 2 in said next position. The plate 2 heated at the first heating station is quickly tacked and welded to the skeleton. Subsequent plates 2 in and behind the next heating position are heated, tacked and finish-welded by repeating the same operations as described above. It has been shown experimentally that, when the tack welding is promptly and reliably carried out, the plate 2 where heat still remains will not develop a considerable tensile stress, and that the plate can generate a sufficient residual stress when reliably finish-welded to the skeleton and then allowed to cool. If the parts gripped by the grasp electrodes can be avoided as positions at which welding is to occur, it will be no problem to perform the finish welding without the tacking. In addition, an arrangement in which the grasp electrodes are partly cut away or apertured to permit tack welding is very convenient because the plate can be tack-welded before the detachment of the electrodes. At the stage of the finish welding, spot welding is suitable for the panel to this type, and continuous welding such as arc welding is unsuitable because it gives rise to distortions. The plate 2, fixed to the skeleton by the finish welding, develops a tensile residual stress in the plate 2 owing to a thermal shrinkage deformation attendant upon the subsequent natural cooling, whereby the fabrication of the panel free from any "sag" is completed. The heating temperature of the plate 2 can be controlled by way of temperature sensors previously disposed at appropriate positions on the plate 2 as needed, detection signals of the temperature sensors during the heating being associated with the electric circuit of the grasp electrodes 3.

Specifically one sensor may be set at the required lowest temperature and the other at the required highest temperature so as to control the heating temperature between them.

The predetermined temperature T during heating the plate 2 is set so that the plate 2 may give rise to a required tensile residual stress, in consideration of the material of the plate 2, the ambient temperature, the strength of the skeleton, the handling of the plate 2 after the heating, the period of time taken between tacking and the start of the finish welding and so forth. An example of the predetermined temperature T will be calculated where stainless steel plate 1.5 mm thick is employed for the plate 2, the ambient temperature is about 20°C, and the period of time between tacking and the start of the finish welding is about 1 minute.

It is known that a tensile residual stress necessary for preventing the occurrence of the welding distortion of the plate 2 after welding may be 15 kg/mm² or so. The temperature difference X between the plate 2 and the skeleton on which this plate is to be mounted, for developing the above tensile residual stress is evaluated with the following formula:

$X = k \cdot \sigma/\sigma y$

$\sigma$: tensile stress,

$\sigma y$: yield stress or proof stress value,

$k$: temperature difference at which a tensile stress corresponding to $\sigma y$ develops.

Where $\sigma = 15$ kg/mm², $\sigma y = 52.7$ kg/mm² and $k = 154°C$ are respectively substituted into the above formula, the temperature difference X becomes about 44°C. Meanwhile, a cooling rate near, e.g., 90°C is read to be:

about 6°C/min

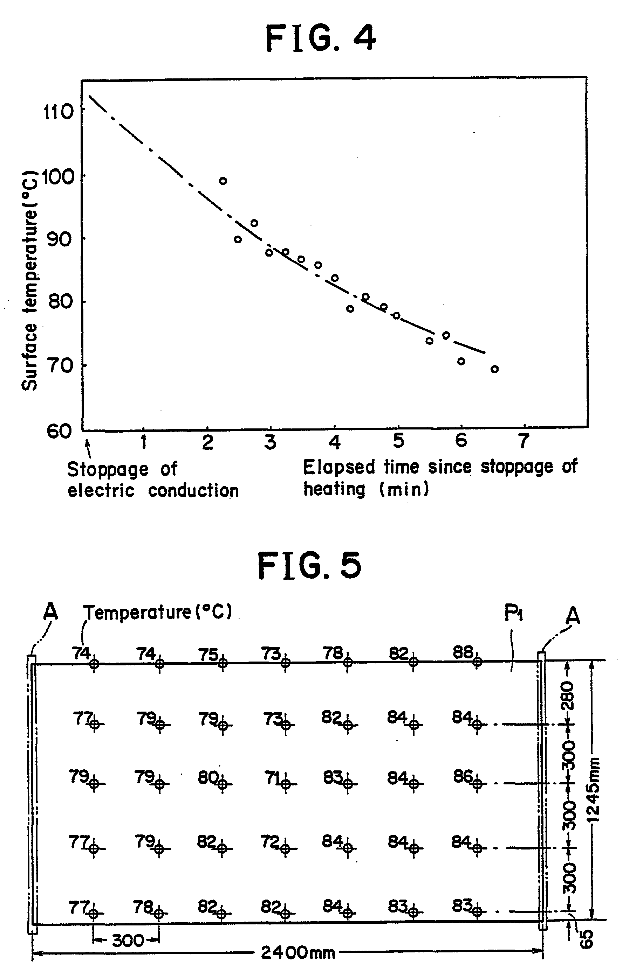

from the diagram of the cooling curve of the stainless steel plate after the heating thereof as shown in Fig. 4. The temperature difference X is needed at the point of time at which the welding fixation of the plate 2 has ended. Thereafter, assuming that the period of time between the end of the heating and the completion of the tack welding is approximately 1 minute and that the ambient temperature, namely, the temperature of the skeleton is 20°C, the heating target temperature of the plate 2 becomes 20°C + 44°C + 6°C = 70°C. Accordingly, the predetermined temperature T of the plate 2 during the production of the product should desirably be set at approximately 80°C with some allowance made for the aforementioned heating target temperature.

In this connection, there will now be described the essential points of heating tests which were conducted as to conditions for uniformly heating at 80°C stainless steel plates of various shapes to be utilized as the plates 2.

Fig. 5 shows the surface temperature (in °C) of a plate measured when a test piece $P_1$ made of stainless steel plate 1245 mm wide, 2400 mm long and 1.5 mm thick and having no cut-away part was subject to a heating test by direct conduction heating based on grasp electrodes A, A. This heating test was carried out under the conditions of a current value of 4000 amperes and a total conduction time (conduction with pulse at 20 Hz) of 3 minutes and produced the favourable results of the highest temperature of 88°C and the lowest temperature of 71°C.

Fig. 6, shows the surface temperature (in °C) of a plate measured when a test piece $P_2$ made of stainless steel plate, which was 1245 mm wide, 3155 mm long and 1.5 mm thick and which had a cut-away part B 950 mm wide and 1420 mm long centrally of the plate, was subjected to a heating test by direct conduction heating based on grasp electrodes A, A. This heating test was carried out under the conditions of a current value of 3100 amperes and a total conduction time (conduction with pulses at 20 Hz) of 3 minutes. Very intense heating occurred in both the sideward parts of the cut-away part B; and the highest temperature of 207°C and the lowest temperature of 27°C were measured.

Shown in Fig. 7 are the surface temperatures (in °C) of the plate in the case of a heating test in which, in order to eliminate such a conspicuous deviation in the temperature distribution, electric conduction members C each being made of an aluminum alloy plate 1.6 mm thick were interposed in the cut-away part B. This heating test was carried out under the conditions of a current value of 4100 amperes and a total conduction time (conduction with pulses at 20 Hz). The deviation of the temperature distribution was sharply improved, and results close to the target heating temperature of 80°C mentioned above were obtained. In order to raise the temperatures still more, the conduction time of the current value may be set greater.

In the embodiments, only flat plates have been exemplified. However, if the skeleton exhibits a sufficient strength and can satisfactorily endure a tensile residual stress a curved panel can be produced. The production of a curved panel would desirably utilize grasp electrodes formed into a shape which conforms to the curved surface.

In the case where the tack welding is executed without detaching the grasp electrodes, the time taken for detaching the electrodes and the time taken for moving the electrodes is saved, and in the case where the finish welding is executed immediately after the heating, the time taken for tack welding added to the above total time can be saved. Thus, the heating temperature can of course be lowered in correspondence with the saved time.

It will be understood that input energy can be readily adjusted in accordance with the material and dimensions of a plate and is very easily controlled with sensors. Moreover a tensile residual stress for preventing the occurrence of a "sag" can be developed for a plate having a cut-away part, so the "sag" is conspicuously reduced. In addition, resistance heating means for preheating a plate can be readily adapted to variations in the material, size and thickness of the plate and the geometries of a cut-away part by the use of grasp electrodes and electric conduction members, to attain the excellent effects that the quality of a panel product is enhanced, that the limitation of the size of a panel found in the prior-art methods and apparatus is not involved and that a temperature control can be performed very easily. All the aspects of performance

**Claims**

1. A method of panel construction in which a metallic panel plate (2) is heated to cause thermal expansion, and is secured while expanded to a metallic panel skeleton such that the shrinkage consequent upon cooling of the plate (2) develops tensile residual stress in the plate to prevent sag of the panel, the method being characterized by the steps of positioning the plate (2) on the skeleton, gripping opposite ends of the plate with grasp electrodes (5–7) of a resistance heating means (1), heating the plate (2) to a predetermined temperature by causing an electric current to flow therethrough between said grasp electrodes (5–7), and welding the plate (2), while in a heated, expanded condition, to said skeleton.

2. A method as claimed in claim 1 characterized by the step of bridging a cut-out or aperture in the plate (2) by one or more electrically conductive members (4) so as electrically to interconnect parts of the plate on opposite sides of the cut-out or aperture directly rather than solely by way of the periphery of the cut-out or aperture.

3. A method as claimed in claim 1 or claim 2 characterized by the use of temperature sensors associated with the plate (2) and effecting control of the resistance heater.

4. Apparatus for use in panel construction comprising support means for supporting, in use, a metallic panel skeleton upon which a metallic panel plate is to be secured to constitute the panel, heating means for heating a panel plate (2), and welding means for welding the plate (2) to the skeleton, characterized in that said heating means comprises an electrical resistance heater having grasp electrodes (5, 6) for releasably gripping opposite ends of the plate (2) in use.

5. An apparatus as claimed in claim 4 characterized in that the heating means further includes one or more electrically conductive members (4) for bridging an aperture or cut-out in the plate (2) to be heated by the resistance heater.

6. An apparatus as claimed in claim 4 or claim 5 characterized by including temperature sensors associated in use with the plate being heated and effecting control over the operation of the heating means.

**Patentansprüche**

1. Verfahren zur Paneelkonstruktion, bei dem eine metallische Paneelplatte (2) zum Erzielen von thermischer Ausdehnung erwärmt wird und an einem metallischen Paneelgerippe im ausgedehnten Zustand so befestigt wird, daß das dem Abkühlen der Platte (2) folgende Schrumpfen Restzugspannung in der Platte zum Verhindern von Deformation des Paneels entwickelt, wobei das Verfahren gekennzeichnet ist durch die Schritte Positionieren der Platte (2) auf dem Gerippe, Ergreifen der entgegengesetzten Enden der Platte mit Greifelektroden (5–

7) einer Widerstandsheizeinrichtung (1), Erwärmen der Platte (2) auf eine vorbestimmte Temperatur, indem elektrischer Strom dadurch zwischen den Greifelektroden (5–7) geschickt wird, und Schweißen der Platte (2) in dem erwärmten, ausgedehnten Zustand an das Gerippe.

2. Verfahren nach Anspruch 1, gekennzeichnet durch den Schritt Überbrücken einer Ausnehmung oder Öffnung in der Platte (2) durch ein oder mehrere elektrisch leitende Teile (4) so, daß Teile der Platte auf entgegengesetzten Seiten der Ausnehmung oder Öffnung direkt elektrisch verbunden werden anstatt nur durch den Weg über die die Ausnehmung oder die Öffnung umgebende Umgebung.

3. Verfahren nach Anspruch 1 oder 2, gekennzeichnet durch das Benutzen von Temperatursensoren, die mit der Platte (2) verbunden sind und die Steuerung des Widerstandsheizers bewirken.

4. Einrichtung zur Benutzung bei der Paneelkonstruktion mit einer Trageinrichtung zum Tragen bei der Benutzung eines metallischen Paneelgerippes, auf dem eine metallische Paneelplatte zum Darstellen des Paneeles befestigt ist, einer Heizeinrichtung zum Erwärmen einer Paneelplatte (2) und eine Schweißeinrichtung zum Schweißen der Platte (2) an das Gerippe, dadurch gekennzeichnet, daß die Heizeinrichtung einen elektrischen Widerstandsheizer mit Greifelektroden (5, 6) zum lösbaren Greifen entgegengesetzter Enden der Platte (2) bei der Benutzung aufweist.

5. Einrichtung nach Anspruch 4, dadurch gekennzeichnet, daß die Heizeinrichtung weiter ein oder mehrere elektrisch leitende Teile (4) zum Überbrücken einer Öffnung oder einer Ausnehmung in der Platte (2), die durch den Widerstandsheizer zu heizen ist, aufweist.

6. Einrichtung nach Anspruch 4 oder 5, gekennzeichnet durch Einschließen von Temperatursensoren, die bei der Benutzung mit der zu heizenden Platte verbunden sind und die Steuerung über die Tätigkeit der Heizeinrichtung bewirken.

**Revendications**

1. Procédé de construction d'un panneau, dans lequel une plaque de panneau métallique (2) est chauffée pour engendrer sa dilatation thermique, et est fixée sur une ossature de panneau métallique pendant qu'elle est dilatée, de sorte que le retrait consécutif au refroidissement de la plaque (2) développe une contrainte résiduelle de tension dans la plaque pour empêcher le fléchissement du panneau, ce procédé étant caractérisé par les étapes consistant à positionner la plaque (2) sur l'ossature, à saisir les extrémités opposées de la plaque avec des électrodes de préhension (5 à 7) d'un moyen de chauffage par résistance (1), à chauffer la plaque (2) à une température prédéterminée en faisant passer un courant électrique à travers la plaque entre les électrodes de préhension (5 à 7), et à souder la plaque (2) sur l'ossature pendant qu'elle est à l'état chauffé et donc dilaté.

2. Procédé selon la revendication 1, caractérisé par l'étape consistant à faire traverser une découpe ou ouverture dans la plaque (2) par un ou plusieurs éléments électriquement conducteurs (4), de manière à relier électriquement directement entre elles les parties de la plaque situées de chaque côté de la découpure ou ouverture, plutôt qu'uniquement par l'intermédiaire de la périphérie de la découpe ou ouverture.

3. Procédé selon la revendication 1 ou 2, caractérisé par l'utilisation de capteurs de température associés à la plaque (2) et assurant la commande du moyen de chauffage par résistance.

4. Appareil utilisable pour la construction d'un panneau, comprenant des moyens de support pour supporter, en utilisation, une ossature de panneau métallique sur laquelle doit être fixée une plaque de panneau métallique pour constituer le panneau, un moyen de chauffage pour chauffer la plaque de panneau (2), et un moyen de soudage pour souder la plaque (2) sur l'ossature, caractérisé en ce que le moyen de chauffage consiste en un moyen de chauffage par résistance possédant des électrodes de préhension (5, 6) pour saisir de manière détachable, en utilisation, les extrémités opposées de la plaque (2).

5. Appareil selon la revendication 4, caractérisé en ce que le moyen de chauffage comprend en outre un ou plusieurs éléments électriquement conducteurs (4) pour traverser une ouverture ou découpe dans la plaque (2) qui doit être chauffée par le moyen de chauffage par résistance.

6. Appareil selon a revendication 4 ou 5, caractérisé en ce qu'il comprend des capteurs de température associés, en utilisation, à la plaque chauffée, et assurant la commande du fonctionnement du moyen de chauffage.

# FIG. 1

# FIG. 2

# FIG. 3

# FIG. 4

Surface temperature(°C) vs Elapsed time since stoppage of heating (min)

Stoppage of electric conduction

# FIG. 5

Temperature(°C)

| 74 | 74 | 75 | 73 | 78 | 82 | 88 |
| 77 | 79 | 79 | 73 | 82 | 84 | 84 |
| 79 | 79 | 80 | 71 | 83 | 84 | 86 |
| 77 | 79 | 82 | 72 | 84 | 84 | 84 |
| 77 | 78 | 82 | 82 | 84 | 83 | 83 |

A    P₁    A

280
300
300
1245mm
300
65

300    2400mm

# FIG. 6

# FIG. 7

EP 0 226 334 B1

A

Temperature (°C)

P3

A

72  71  58  75  72  75  73  64  83  95

30mm

1480mm

230mm

70  75  63  72  85  81

77  84

30mm  C

70  74  69  72  86  78

78  C  90  C

72  74  71  73  72  79

C

71  71  71  77  78  78  80  76  78  71

B